# EUROPEAN PATENT SPECIFICATION

(11) **EP 1 960 457 B1**
(45) Date of publication and mention of the grant of the patent: **11.04.2012**
(21) Application number: 06830306.4
(22) Date of filing: 04.12.2006
(51) Int. Cl.: C08J 3/07, C08K 9/04, C08K 5/02, C08L 81/06

(54) **PROCESS FOR DISPERSING SOLID PARTICLES IN PARTICULATE POLYMERS**
VERFAHREN ZUR DISPERSION VON FESTSTOFFTEILCHEN IN TEILCHENPOLYMEREN
PROCÉDÉ DE DISPERSION DE PARTICULES SOLIDES DANS DES POLYMÈRES PARTICULAIRES

(30) Priority: 05.12.2005 US 741913 P
(43) Date of publication of application: 27.08.2008
(73) Proprietor: Solvay SA, 1050 Brussels (BE)
(72) Inventor: CAILLE, Jean-Raphael, B-5000 Namur (BE); GAUTHY, Fernand, B-1780 Wemmel (BE); GLOESENER, Daniel, B-5380 Sart d'Avril-Fernelmont (BE)
(74) Representative: Jacques, Philippe
(86) International application number: PCT/EP2006/069240
(87) International publication number: WO 2007/065866

(56) References cited:
- EP-A1- 0 598 603
- WO-A-2004/081088

## Description

This application relates to a process for dispersing solid particles in polymers. More specifically, the present invention relates to a process for incorporating solid particles of a first polymer, in a highly dispersed manner, onto the sruface of particles of a second polymer. The present invention also relates to solid particles of a polymer having solid particles of another polymer homogeneously dispersed at their surface.

Plastic materials are largely used for manufacturing various shaped articles, soft or rigid, in numerous domains like materials for the building industry, interior furnishing and under the bonnet articles for vehicles, aeronautic industry, medical industry, electric and electronic industries, electric domestic appliances, packaging, pipes and insulated power cables, transportation of goods, etc.

For highly technical applications, it may be advantageous to improve and/or modify the properties (electrical, mechanical, chemical, physical, thermal.) of some plastic materials, including engineering plastics. This can be achieved by incorporating, in these plastic materials, various amounts of organic or inorganic compounds, including organic polymers, which possess the required properties at a higher level and/or which possess additional properties to be conferred to said plastic materials. The amount of organic or inorganic compounds to be incorporated in the plastic materials for that purpose is linked to their dimensions and way of dispersion, i.e. the finer and the more dispersed the compounds are in the plastic material matrix, the less is their amount to be incorporated. Moreover, when the particles of said organic or inorganic compounds are nanoparticles, i.e. particles of dimensions below 100 nm (one hundred nanometers), these compounds are much more efficient in imparting a specific property to plastic materials containing them than are particles of identical composition but of large size.

It is well known to incorporate various compounds and additives, including organic polymers, in plastic material, by mechanical means, such as melt blending them together in kneaders, extruders, etc.

More recently, it has been proposed (see e.g. document EP-A-1603968) to manufacture blends of a plastic material and of a polymer containing vinyl chloride, by dissolving both in a common (organic) solvent, by coprecipitating both by injecting a common non-solvent in the so-formed solution and by recovering solid particles of the formed blends.

It happens that there is no common solvent for the plastic material and for the compound and/or additive to be mixed or blended therewith. In these circumstances, a technical solution has been proposed, e.g. in document WO 01/48060, for preparing composites of nano-particles and polymers. According to the process disclosed in this document, a liquid suspension of nano-particles is mixed with a polymer-solvent solution, the solvent being completely miscible with the liquid in which the nano-particles are suspended and the polymer being insoluble in said liquid. A solid phase consisting of an intimate mixture of nano-particles and polymer separates from said liquid.

A problem limiting the scope of this process is the necessity to find solvents which are able to dissolve polymers of practical interest, like, for instance, engineering polymers and, at the same time, which are completely miscible with the liquid in which the nano-particles are suspended.

Document EP-A-0718346, in turn, describes a process for incorporating a solid form of an additive into particles of a thermoplastic synthetic polymer, which comprises :
providing a fluid mixture of.the additive;
providing a solution of the polymer resin;
admixing the additive mixture with the polymer resin solution; and removing the fluid and the solvent from the admixture simultaneously, whereby there is a co-precipitation of the addititve and the polymer resin powder from the mixture.

More often than not, neither is the rate of incorporation of the additive in the polymer sufficiently high, nor is the dispersion of the additive in the polymer enough homogeneous.

The present invention aims to overcome these disadvanges by providing a process for incorporating solid particles in polymers, in a highly dispersed manner and at a high rate of incorporation.

Accordingly, the present invention relates to a process for dispersing solid particles in a particulate polymer, which comprises the steps of :
(a) forming a solution (OS) of particles of a polymer (P1) in an organic solvent (S);
(b) forming an aqueous dispersion (AD) of solid particles (P2);
(c) mixing said solution (OS) with said dispersion (AD) as to obtain a liquid mixture (M), while avoiding substantial precipitation of either polymer (P1) or particles (P2);
(d) mixing said liquid mixture (M) with a non-solvent (NS) as to obtain a slurry (SL) comprising particles (P3);
   a phase transfer agent (PTA) being further present during steps (b), (c) and/or (d).

According to step (a) of the process of the present invention, a solution (OS) of particles of a polymer (P1) is formed in an organic solvent (S). The polymer (P1) to be dissolved in solvent (S) can be in the form of powder or of pellets, i.e. in the form of particles suitable for processing. The powder used may therefore, for example, be a "crude" powder from polymerization, i.e. a pulverulent material which is the direct result of the polymerization and product recovery step. The term "pellets" mean extruded strands of polymer cut at the extruder outlet.

Any polymer at least partially soluble, and preferably substantially soluble, in an organic solvent may be used as polymer (P1) in step (a) of the present invention. Examples of such polymers are synthetic thermoplastic polymers which include : hydrocarbon polymers, such as polyethylene, polypropylene, other polyolefins and copolymers of ethylene and 1-olefins; polystyrene; polyvinyl halides; polyvinylidene halides; polyacrylates, including e.g. polymethylmethacrylate; linear polycarbonamides; polycarbonimides, polycarbonates; polyoxyalkalenes; polyphenylene ether; polyalkylene terephtalates; polyetherimide esters; polyether esters; aromatic sulfone polymers, including e.g. polysulfone, polyphenylsulfone and polyethersulfone; aromatic ether ketone polymers, including e.g. polyetheretherketones and polyetherketoneketones; and any known blends of these polymers. Preferably, polymer (P1) is an aromatic sulfone polymer, more preferably polyphenylsulfone.

The organic solvent (S) capable of partially, and preferably substantially totally, dissolving the polymer (P1) is generally chosen from liquids having a solubility parameter (a definition, and experimental values, of which is found in "Properties of Polymers", D. W. Van Krevelen, 1990 Edition, pp. 200-202, and in "Polymer Handbook", J. Brandrup and E. H. Immergut, Editors, Second Edition, p. IV-337 to IV-359) close to the solubility parameter of the polymer to be dissolved and/or having strong interactions therewith (hydrogen bonds, for example). The term "close" is generally equivalent to "not deviating by more than 6 units" (expressed in Mpa^{1/2}). It is generally an organic solvent, preferably a polar one such as MEK (methyl ethyl ketone), that yields good results with many polymers and, in particular, with halogenated polymers such as PVC. It is understood that solvent means both single substances and mixtures of substances. In particular, in the case of a continuous and/or closed-loop recycling method, the solvent may be a stream of recycled liquid and may contain a certain quantity of non-solvent. Preferably, the solubility parameters of polymer (P1) and of solvent (S) do not differ from each other from more than about 4, even more preferably from not more than about 1,8. The boiling temperature of the solvent at atmospheric pressure is generally lower than 150°C, often lower than 120°C. For reasons explained later in the present description, it may be advantageous for these solvents to be somewhat water miscible (i.e. to allow about 5 % in weight of water or even about 10 % in weight of water without phase separation). This is in fact the case for most polar solvants, which are therefore preferred.

Examples of suitable solvents (S) for polymers (P1) include ethyl acetate; methylethyl ketone, pure or mixed with hexane; diethylketone, N-methylpyrrolidone; N,N-dimethylformamide; N,N-dimethylacetamide; dimethylsulfoxide; cresylic acid; sulfolane; formamide; cyclohexanone; etc.

Preferably, the solvent is chosen among N-methylpyrrolidone (NMP), N,N-dimethylformamide (DMF), N,N-dimethylacetamide (DMAC), sulfolane, cyclohexanone and mixtures thereof.

According to an advantageous embodiment of the process of.the present invention, a phase-separator compound (PS), generally compatible with the solvent (S) (and incompatible with the non-solvent (NS) used in step (d) (see later)) is also present during the formation of solution (OS). The main reason for this is that, given the cost of the polymer (P1) and of the solvent (S) and the disadvantages which could arise through their disposal in the environment, it is desirable to treat the liquid mixture (M) / non-solvent (NS) mixed in step (d) so that each of its constituents can be recovered separately.

The addition of certain phase-separator compounds (PS) to the solvent (S) can facilitate the later separation of the solvent (S)/non-solvent (NS) at the issue of step (d) during solvent (S)/non-solvent (NS) recovery and recycle. The process therefore becomes more flexible, less energy-intensive and less expensive.

According to this advantageous embodiment of the invention, the phase-separator compound (PS) is defined as a chemical compound which promotes the phase separation of the mixtures of solvent (S)/non-solvent (NS) in step (d). According to this embodiment, the phase-separator compound (PS) is advantageously miscible with the solvent (S) and immiscible with the non-solvent (NS). It will therefore be substantially absent from the non-solvent-rich phase coming from the separation of the mixture of the three chemical compounds, and this can be advantageous if the non-solvent (NS) can be disposed of into the environment (for example if the non-solvent (NS) is water), and also makes it easier to obtain a slurry (SL) substantially free from this solvent. The phase-separator compound (PS) preferably has a solubility parameter different from that of the polymer (P1) to be dissolved.

The terms "miscible with the solvent (S)" are understood to designate solubility in the solvent generally in all volume proportions at room temperature, that is to say that one uniform liquid phase is thus formed.

The terms "immiscible with the non-solvent (NS)" are understood to designate solubility in the non-solvent of less than 5 % v/v at room temperature, that is to say that phase separations occurs for concentration of 5 % v/v or higher.

The phase-separator compound (PS) is preferably chosen among aliphatic or aromatic hydrocarbons, optionally halogen substituted, having from 5 to 10 carbon atoms. Excellent results have been obtained by choosing toluene as phase-separator compound (PS), in particular when the solvent (S) is cyclohexanone. Excellent results have been also obtained by choosing monochlorobenzene as phase-separator compound (PS), in particular when the solvent (S) is sulfolane.

The amount of solvent (S) (or of mixture of solvent/phase-separator) to be used in step (a) of the process of the invention is typically chosen so as to prevent the viscosity increase brought about by dissolving the polymer (P1) from interfering with the good conduct of the process (filtration, etc.). In some cases, it is preferable that, during the dissolution step (a), the amount of polymer (P1) does not exceed 250 g per liter of solvent (S) and of any phase-separator compound (PS), and in particular 200 g/l, preferably 100 g/l. In other cases, this content may be 250 g/l or more, more specifically 350 g/l or more.

Step (a) of the process of the invention generally takes place under a pressure which is at least atmospheric pressure, more specifically at least 1.5 bar. This pressure advantageously does not exceed 10 bar, preferably 5 bar.

Step (a) of the process of the invention is further carried out at a temperature of generally at least 75°C, more specifically at least 100°C; said temperature generally does not exceed 125°C, more specifically 110°C.

It can moreover be advantageous to carry out said step (a) under an inert atmosphere, for example under nitrogen; this is generally done for avoiding any risk of explosion or of degradation of the solvent. [Preferably all steps (a), (c) and (d) of the process of the invention are carried out under inter atmosphere].

The dissolution of the polymer (P1) in the solvent (S) takes place generally in a vessel or dissolution tank typically equipped with a suitable device for controlling temperature and pressure.

According to step (b) of the process of the present invention, an aqueous dispersion (AD) of solid particles (P2) is formed. By "aqueous dispersion" is meant that the solid particles (P2) are stably dispersed in an aqueous medium, so that advantageously, settling of the particles does not occur within the time when the dispersion will be used.

For the purpose of the present invention, the term "particle" is intended to denote a mass of solid material that, from a geometrical point of view, has a definite three-dimensional volume and shape, characterized by three dimensions, wherein none of said dimensions exceeds the remaining two other dimensions of more than 10 times. Particles are generally not equidimensional, i.e. are longer in one direction than in others.

Particles (P2) may advantageously be nanoparticles, i.e. particles having nanometric dimension (i.e. an average primary particle size of less than 100 nm).

Nanoparticles suitable for the purpose of the invention have preferably an average primary particle size of less than 90 nm, more preferably of less than 80 nm, most preferably of less than 70 nm. They have an average primary particle size of more than 2 nm, preferably of more than 10 nm, most preferably of more than 20 nm.

The "average primary particle size" can be measured by dynamic laser light scattering (DLLS) technique according to the ISO 13321 Standard.

It should be also understood that, following the purposes of ISO 13321 Standard, the term "average particle size" of primary particles is intended to denote the harmonic intensity-averaged particle diameter X_{PCS}, as determined by equation (C.10) of annex C of ISO 13321.

For the purpose of the present invention, particles (P2) can be constituted by inorganic as well as organic compounds. In the case of organic compounds, they can be monomeric as well as polymeric compounds. Hence, particles (P2) can be constituted by conventional additives used in the art of thermoplastics compounding, such as inorganic fillers, including clay, talc, magnesium hydroxide and the like; impact modifiers; antistats; antioxydants; plasticisers; processing aids; stabilizers; colorants; mold release agents; fire-proof agents and flame retardants, including metal oxides, hydroxides and salts, triphenyl phosphate and the like; ultraviolet screening agents; inorganic and organic pigments, carbon black; etc.

Particles (P2) can also comprise organic polymers, different from polymer (P1). Organic polymers comprised in particles (P2) may be any water-dispersible polymers. Preferably, said organic polymers are synthetized according to a polymerization process comprising at least one step performed in an aqueous medium. Organic polymers comprised in particles (P2) are generally selected from polymers deriving from one or more ethylenically unsaturated monomers, synthesized in that way. Examples of ethylenically unsaturated monomers from which said organic polymers are derived are acrylic monomers, styrenic monomers and ethylenically unsaturated monomers which are halogenated. Organic polymers derived from halogenated ethylenically unsaturated monomers are preferred.

Polyesters and polyurethanes are among other examples of organic water-dispersible polymers usable in accordance with the process of the present invention.

Examples of polymers derived from acrylic monomers include polymers derived from alkyl acrylates and methacrylates, such as methylacrylate and methylmethacrylate.

Examples of polymers derived from styrenic monomers include polystyrene and styrene copolymers, such as block copolymers comprising at least a polystyrene block and anther block selected from alkyl polyacrylates and methacrylates or vinyl polyacetate.

Polymers derived from halogenated ethylenically unsaturated monomers generally comprise at least 50 % by weight, preferably 70 % by weight, of monomeric units derived from such monomers. These halogenated monomers are preferably selected among chlorinated and fluorinated monomers; more preferably among fluorinated monomers.

For the purpose of the present invention, the definition "polymers derived from halogenated monomers" encompasses homopolymers derived from these monomers as well as copolymers derived from at least one other halogenated and/or ethylenically unsaturated non-halogenated monomer such as ethylene, vinyl acetate and acrylic monomers.

For the purpose of the present invention, the definition "chlorinated monomers" encompasses chlorinated ethylenically unsaturated monomers which are aliphatic and which contain one or more chlorine atoms as sole heteroatom. Examples of chlorinated monomers comprising one chlorine atom are allyl chloride, crotyl chloride and vinyl chloride. Example of chlorinated monomers comprising two chlorine atoms is vinylidene chloride.

For the purpose of the present invention, the definition "fluorinated monomers" encompasses fluorinated ethylenically unsaturated monomers which are aliphatic and which contain one or more fluorine atoms as sole heteroatom. Examples of fluorinated monomers comprising one fluorine atom are allyl fluoride and vinyl fluoride. Example of fluorinated monomers comprising two fluorine atoms is vinylidene fluoride. Other examples of fluorinated monomers are trifluorethylene, tetrafluorethylene and hexafluoropropylene. Very good results have been obtained with polymers derived from tetrafluorethylene

When particles (P2) comprise organic polymers, the aqueous dispersion (AD) formed in step (b) of the process in accordance with the invention can be obtained directly by processes known in the art as dispersion or emulsion polymerizations (i.e. latex), optionally followed by concentration and/or further addition of surfactant or can be obtained by re-dispersing dry polymer-containing particles (P2) in water, optionally in the presence of suitable surfactants or dispersing agents.

Processes comprising a microemulsion polymerization step as above detailed are particularly suitable for preparing aqueous dispersions (AD) of polymer-containing nanoparticles (P2) having an average primary particle size of less than 100 nm.

The amount of particles (P2) dispersed in aqueous dispersion (AD) is depending from the final amount of particles (P2) intended to be dispersed into the polymer (P1). The amount of particles (P2) dispersed in aqueous dispersion (AD) is generally less than 50 wt %, preferably less than 40 wt %. The said amount is generally higher than 15 wt %, preferably higher than 25 wt%.

Aqueous dispersion (AD) advantageously comprises a surfactant, which improves the dispersion of particles (P2) in the aqueous medium. Said surfactant is generally selected among anionic surfactants, cationic surfactants and zwitterionic or amphoteric surfactants. When the particles (P2) comprise organic polymers obtained directly by processes known in the art as dispersion or emulsion polymerizations, these surfactants may be of the same kind as those optionnally used during said polymerizations.

Examples of anionic surfactants are sodium mono- or dialkylsulfosuccinates; sodium or ammonium nonylphenylphosphates; sodium, potassium or ammonium alkylcarboxylates; sodium or ammonium alkylsulfates;sodium primary or secondary alkylsulfonates; sodium or ammonium alkylarylsulfonates, like sodium or ammonium n-dodecylbenzene and tetrapropylbenzene sulfonates.

These anionic surfactants may be alkoxylated. Examples of alkoxylated anionic surfactants are ethoxylated sodium monoalkylsulfosuccinates; alkoxylated sodium or ammonium nonylphenylphosphates; sodium, potassium or ammonium alkylcarboxylates; sodium or ammonium ethoxylated alkylsulfates, like sodium ethoxylated n-laurylsulfates; alkoxylated alkylarylsulfonates, like alkoxylated octyl- and nonylphenysulfonates.

Further examples of anionic surfactants are the anionic (per)fluorinated surfactants, having a (per)fluoropolyether or (per)fluorocarbon structure, having for example carboxylic or sulphonic end groups saponified with ammonium groups, or alkaline or alkaline-earth metals.

Examples of cationic surfactants are the primary and secondary amine chlorhydrates and the quaternary ammonium salts, like octadecylammonium chloride, hexadecyltrimethylammonium chloride and octadecyl-trimthylammonium chloride, for instance.

These cationic surfactants may be alkoxylated. Examples of alkoxylated cationic surfactants are ethoxylated primary and secondary amine chlorhydrates.

Further examples of cationic surfactants are imidazolium and phosphonium salts.

Examples of amphoteric surfactants are the surfactants comprising a carboxylic group (acid pH : -COOH / basic pH : -COO- Na⁺ for instance) and an amine group (basic pH : -NH₂ / acid pH : -NH₃⁺ Cl⁻ for instance).

These amphoteric surfactants may be alkoxylated. Examples of alkoxylated amphoteric surfactants are the surfactants comprising an ethoxylated carboxylic group (acid pH : -COOH / basic pH : -COO⁻ Na⁺ for instance) and an ethoxylated amine group (basic pH : -NH₂ / acid pH : -M₃⁺ Cl⁻ for instance).

These surfactants can also be used in admixture. Anionic surfactants are preferred. Among them, anionic (per)fluorinated surfactants having saponified carboxylic end groups are more preferred, especially when particles (P2) comprise polymers derived from fluorinated monomers. In the case partices (P2) are particles of PTFE, ammonium perfluoro-octanoate gives good results.

According to step (c) of the process of the present invention, solution (OS) is mixed with aqueous dispersion (AD) as to obtain a liquid mixture (M), while avoiding substantial precipitation of either polymer (P1) or particles (P2).

Step (c) can be accomplished notably either :
(c-1) adding the solution (OS) to the aqueous dispersion (AD); or
(c-2) adding the aqueous dispersion (AD) to the solution (OS).

Particles (P2) may be soluble or insoluble in solution (OS); generally, particles (P2) are insoluble in said solution.

Premature precipitation of either polymer (P1) or particles (P2) may be avoided in either embodiment (c-1) or (c-2) by a vigorous stirring of the mixture, provided by any known device or process providing a high shear agitation, for instance by a mechanical stirrer and/or by insufflation of a gas, etc.

When step (c) is performed according to embodiment (c-1), it can be helpful to dilute aqueous dispersion (AD) by addition of water. This is advisable, for instance, when particles (P2) are polymer nanoparticles under the form of an aqueous dispersion (AD) obtained from a process comprising a microemulsion polymerization step. This can be performed by adding water to the aqueous dispersion (AD) or, preferably, by adding the aqueous dispersion (AD) to water. Premature precipitation of polymer (P1) may be further avoided by saturating said added water with an amount of an organic solvent (S) miscible therewith. Mixing then the diluted solution (OS) and the aqueous dispersion (AD) leads to a stable liquid mixture (M) consisting of an organic phase dispersed in an aqueous phase.

When step (c) is performed according to embodiment (c-2), premature precipitation of particles (P2) may further be avoided by saturating organic solvent (S) with an amount of water miscible therewith. Mixing then the solution (OS) and the aqueous dispersion (AD) leads to a stable liquid mixture (M) consisting of an aqueous phase dispersed in an organic phase.

It is preferred to perform step (c) of the process of the invention according to embodiment (c-1).

Respective amounts of aqueous dispersion (AD) and solution (OS) to be mixed together are depending from the particles concentration of each of aqueous dispersion (AD) and solution (OS) and from the final amount of particles (P2) which are to be incorporated in particulate polymer (P1).

Generally, aqueous dispersion (AD) and solution (OS) are mixed together in proportions such that the weight ratio between particles (P2) and polymer (P1) [(P2) / (P1)] is comprised between 0.001 and 0.5, preferably between 0,002 and 0.2, more preferably between 0.01 and 0.1.

An essential feature of the process of the invention lies in the presence of a phase transfer agent (PTA) during steps (b), (c) and/or (d). This means that if the PTA is already present at step (b), it will remain in steps (c) and (d) and that if it is present at step (c), it will be present during setp (d) as well. In other words : preferably, once the PTA is added in the process of the invention, it will remain there at least until step (d) is performed.

For the purpose of the present invention, the term "phase transfer agent" must be understood as to define any compound which can facilitate the migration of at least a substantial part of particles (P2) from the aqueous phase of dispersion (AD) into the organic phase formed by solution (OS), by extracting them, across the interface between both phases. This migration phenomenon should mainly occur during or at the issue of step (c) of the process of the invention. Accordingly, the phase transfer agent (PTA) should be present at the latest at the issue of step (c) of the process of the invention, i.e. when solution (OS) and dispersion (AD) are mixed to obtain the liquid mixture (M) and before the precipitation of solid particles.

For the purpose of the present invention, the phase transfer agent (PTA) can be selected among a wide variety of liquid and solid compounds, inorganic as well as organic, provided that said agent can perform the function of extracting particles (P2) from the aqueous phase of dispersion (AD) into the organic phase formed by solution (OS). To this end, the PTA generally is a surfactant which is able to interact with the particles (P2) in aqueous dispersion, to surround them (i.e. to cover their surface) so as to render them less hydrophilic (more organophilic) so that these particles will tend to migrate to the organic phase (solution of polymer (P1)).

There are mainly two possibilities in the process according to the invention :
Either : A. the PTA is generated in situ in the disperson (AD) or in the liquid
   mixture (M); or

B. the PTA is added to said dispersion (AD) or liquid mixture (M). Embodiment A. gives good results and is convenient to use in the case particles (P2) are polymer particles because generally, aqueous dispersions of polymer particles comprise an ionic surfactant, which is quite easy to transform (for instance through an ion exchange reaction) in a more organophilic one.

Several types of ionic surfactants may be used in this embodiment, for instance :
(1) salts derived from onium ions, like ammonium, iminium, imidazolium, oxonium, fluoronium, phosphonium, sulfonium, chloronium, arsonium, selenonium, bromonium, stibonium, telluronium, iodonium and bismuthonium (see IUPAC Compendium of Chemical Terminology, 2nd edition, 1997). Examples of those salts are :
   - salts of quaternary ammonium ions, i.e. salts of tetramethyl-, tetrabutyl-, tetradodecyl-, tetrahexadecyl-, triethylphenyl-, trimethylhexylammonium and the like;
   - salts of quaternary phosphonium ions, i.e. salts of triphenylmethyl-, triphenylethyl-, triphenyl n-propyl-, triphenyl n-pentylphosphonium and the like;
   - salts of ternary sulfonium ions, i.e. salts of trimethylsulfonium and the
      like.
   Examples of counter-ions of these salts are : halides, nitrate, chlorate, manganate, sulfate, fluoroborate and the like;
(2) macrocyclic ethers, i.e. crown and macrobicyclic ethers, like 18-crown-6 and {2,2,2} cryptate for instance;
(3) N-alkylphosphoramides, like N-dodecyl- and N-hexadecylphosphoramide for instance;
(4) methylene-bridged phosphorus and sulfur oxides;
(5) polyethylen glycols..

Among all these surfactants, the salts of quaternary ammonium and phosphonium ions are preferred, especially the salts of quaternary ammonium ions.

The ionic exchange reaction can be performed, for instance, by modifying the pH of dispersion (AD). Generally, this is carried out by neutralizing either the possible basicity or acidity of aqueous dispersion (AD). This basicity (resp. acidity) is generally conferred to aqueous dispersion (AD) by the specific nature of the surfactant. Neutralization of aqueous dispersion (AD) is then obtained by adding - either in said aqueous dispersion or, preferably, in the liquid mixture (M) resulting from mixing said aqueous dispersion with the solution (OS) - a proper amount of a Brönstedt acid (in the case dispersion (AD) is basic) or base (in the case dispersion (AD) is acid).

It is a matter of ordinary skill to determine the amount and nature of the acid or base to add, for instance by premeasuring the pH of the aqueous dispersion (AD) and/or liquid mixture (M).

Any inorganic or organic Brönstedt acid or base can be used, as described, to generate the phase transfer agent in accordance with the invention. It is for instance preferred, when anionic surfactants are used during the formation of aqueous dispersion (AD) - which is the most common case - to use a proper amount of a inorganic or organic acid. Examples of inorganic acids are nitric acid, sulfuric acid and the halohydric acid, especially chlorhydric acid. Examples of organic acids are monocarboxylic acids like formic acid and acetic acid.

Conversely, when cationic surfactants are used during the formation of aqueous dispersion (AD), a proper amount of an inorganic or organic base. Examples of inorganic bases are the alkaline and alkaline-earth metal hydroxides, especially sodium hydroxide and ammonia. Examples of organic bases are the amines, like ethylamine for instance and pyridine.

When an inorganic or organic Brönstedt acid or base is used to generate the phase transfer agent (PTA) by reaction with the surfactant, it is generally incorporated, either in aqueous dispersion (AD) or in liquid mixture (M), in an amount which does not exceed the saturation of the aqueous phase. Preferably, the amount of inorganic or organic Brönstedt acid or base, expressed in moles per mole of water present, is comprised between 0,001 and 1 mole / mole, more preferably between 0,05 and 0,1 mole / mole.

As to the second embodiment, where the PTA is added to the medium, it preferably is added at the end of or during step (c). Since the aqueous dispersion generally already comprises a surfactant as explained above, this should be displaced by the PTA so that the latter can play his role. Accordingly, in that embodiment, the PTA should be a surfactant having a big affinity both towards the surface of particles (P2) and towards the organic phase. The acid or basic form of the above mentioned surfactants could play such a role.

According to step (d) of the process of the present invention, the liquid mixture (M) obtained at the issue of step (c) is mixed with a non-solvent (NS) as to obtain a slurry (SL) comprising particles (P3). In a preferred embodiment, these particles (P3) comprise particles of polymer (P1) having substantially thoroughly dispersed at their surface, particles of polymer (P2).

For the purpose of the present invention, the term "non-solvent (NS)" must be understood as defining a non solvent of polymer (P1), i.e. any liquid featuring a solubility parameter (as defined above) markedly different from the solubility parameter of polymer (P1). By the term "markedly different", it must be understood that the respective solubility parameters of the non-solvent (NS) and of the polymer (P1) differ from each other from at least about 4.

Mostly used non-solvents (NS) are water and inorganic liquids.

Advantageously, the non-solvent (NS), if not being water itself, is at least partially miscible with water.

The amount of the non-solvent (NS) can be easily determine by those skilled in the art to bring about the complete precipitation of the dissolved polymer (P1).

Examples of non-solvents (NS) which have been successfully used in the process of the invention are :
- water;
- a mixture comprising water and acetone and/or methanol, preferably in volume ratio water/(acetone and/or methanol) of 1/1;
- a mixture comprising acetone and methanol, preferably in volume ration of 1/1.

In view of its accessibility and for environmental reasons, water is preferred as non-solvent (NS).

In accordance with step (d) of the process of the invention, the non-solvent (NS) can be used in both liquid and gaseous form [i.e. the liquid phase of the non-solvent (NS) and the corresponding, vapor phase are mixed with liquid mixture (M)]. It has been found that when the non-solvent (NS) is mixed in step (d) under the form of liquid and vapor, the precipitation of the polymer (P1) is advantageously accelerated, especially when step (c) is performed in accordance with embodiment (c-2), and the solvent (S) can be evaporated.

According to another embodiment of step (d), organic solvent (S) is advantageously distilled from the mixture (M) by the addition of vapor of the non-solvent (NS).

According to one preferred way to proceed according to the invention, the solvent (S) and the non-solvent (NS) are substantially removed from the mixture (M) by evaporation at a temperature below the boiling point of the non-solvent (NS). This removal is in particular made possible by choosing substances whose boiling point is lower than that of the non-solvent and/or which give an azeotrope therewith.

Advantageously, the solvent (S) and the non-solvent (NS) form an azeotropic mixture. An illustrative example of such a solvent (S)/non-solvent (NS) mixture is cyclohexanone/toluene in 90/10 weight ratio as solvent (S) and water, optionally saturated with cyclohexanone, as non-solvent (NS) wherein both toluene and cyclohexanone can be distilled off at a temperature inferior to the boiling point of water.

When water is used as non-solvent (NS), the addition of steam advantageously enables distillation of any azeotropic mixture used as solvent (S).

In certain cases, the vapours issuing from this distillation and comprising the solvent (S) and the non-solvent (NS), can undergo phase separation upon condensation; this enables easy recovery and recycling of solvent and non-solvent.

A significant advantage of the process according to this preferred embodiment of the invention is therefore that it can operate in a closed loop without generating waste, given that both the phase comprising the solvent (S) and that comprising the non-solvent (NS) can be recycled and reused in the process.

In the process according to the present invention, step (d) is preferably carried out under reduced pressure.

After said step (d), particles (P3) are obtained. In some preferred embodiments, these consist in particles of polymer (P1) having substantially thoroughly dispersed at their surface, particles of polymer (P2).

Particles (P3) are advantageously separated from the liquid medium of the slurry (SL), which medium may be pure non solvent (in the case the solvent has been eliminated by azeotropic distillation for instance) or a solvent/non-solvent mixture. This liquid medium may be eliminated by any known means (evaporation, centrifugation, filtration, etc...).

The process according to the invention can further comprise additional steps of washing and/or drying the particles from the slurry (SL).

The separated and optionally dried particles (P3) from the slurry (SL) are finally advantageously melt compounded in continuous or batch devices, optionally in admixture with polymer (P1). Said separated and optionally dried slurry can be advantageously used as masterbatch, i.e. concentrated additive composition, to be mixed with polymer (P1). Should it be used as masterbatch, it advantageously makes it possible to obtain highly dispersed composition comprising particles (P2), preferably nanoparticles (P2), and polymer (P1).

Melt compounding devices are well-known to those skilled in the art.

Examples of suitable continuous devices to melt compound the separated and optionally dried particles from the slurry (SL) optionally in admixture with polymer (P1) are notably screw extruders. Thus, said slurry, optionally in admixture with polymer (P1), and optionally other ingredients, such as additives, fillers, pigments, processing aids and the like, are advantageously fed in an extruder and extruded.

This operating method can be applied either with a view to manufacturing finished product such as, for instance, hollow bodies, pipes, laminates, calendared articles, or with a view to having available granules containing the desired polymer composition, optionally additives, fillers, pigments, processing aids in suitable proportions in the form of pellets, which facilitates a subsequent conversion into finished articles. With this latter aim, said particles from slurry (SL) are advantageously extruded into strands and the strands are chopped into pellets.

The present invention also concerns particles (P3) of polymer (P1) having substantially thoroughly dispersed at their surface, particles of polymer (P2). As already explained above, depending on the nature of polymer (P1) and particles (P2), the process described above allows to obtain surch particles, which are believed to be original. They generally have a size in the range of the hundred(s) of µm and they have at their surface, particles (P2) with a size in the range of the undred(s) of nm. Besides, when PI is an amorphous polymer (like polycarbonate or polysulhphone), in some cases, the process of the invention may render it (at least partially) cristalline so that the obtained particles are easy to break down in smaller ones (having a size in the range of the µm). Hence, after melt processing, the obtained blend is very homogeneous (even though P1 has become amorphous again).

The invention will be described in more details with reference to the following examples, whose purpose is merely illustrative but not limitative of the scope of the invention itself.

### Example 1R

This example is given for the sake of comparison.

A solution (OS) of a polyphenylsulfone, commercially available from Solvay Advanced Polymers, under the trade name RADEL^{®} R, in a mixture of cyclohexanone/toluene (90/10 wt/wt) was prepared by heating under stirring at 100°C 200 g of PPSU in 2000 g of solvent mixture for 1 hour. The solution was then cooled to 70°C.

In a double jacket reactor equipped with a mechanical stirrer, temperature and pressure regulators and means for introduction of steam, 2325 of degassed water and 175 g of cyclohexanone were introduced for forming the non-solvent liquid mixture (NS) and kept under stirring (600 rpm) at 60°C. While keeping said mixture under stirring at 600 rpm, 9.0 g of an aqueous dispersion of polytetrafluorethylene (PTFE) nanoparticles (obtained from microemulsion polymerization performed in the presence of a surfactant being an ammonium perfluoro octanoate sold under the name ALGOFLON^{®} BMP 76/2 and having a solid content of 33.6 wt % and an average primary particle size of 50-60 nm, were added.

To this suspension kept under stirring, the (OS) solution was then added via a dip tube. The addition was completed after 5 minutes.

Pressure was then set at 400 mbar and steam was injected with a ΔP of 800 mbar; the toluene/water azeotropic mixture and then the cyclohexanone/water azeotropic mixture were distilled off and a slurry (SL) was obtained.

The so-obtained slurry (SL) was then filtered from the aqueous phase on a polyamide screen (75 µm). The recovered product was dried overnight at 100°C under reduced pressure until constant weight.

The dried composition, comprising PTFE dispersed in polyphenylsulfone particles, featured a coarse morphology (granulometric distribution of the particles extending from about 2 mm to a few µm).

### Example 2 (in accordance with the invention)

The proceeding of example 1 was repeated, except that the mixture resulting from the addition of the (OS) solution to the PTFE-based suspension was acidified with 10 ml of an aqueous solution of HCl (0.1 M), functioning as phase transfer agent (PTA), by neutralizing the ammonium carboxylate moieties of the perfluoro-based surfactant, rendering the PTFE nanoparticles more lipophilic and enhancing their ability to migrate in the organic (OS) phase.

The dried composition, comprising PTFE dispersed in polyphenylsulfone particles, featured a regular morphology comprising particles of roughly 100 µm of average size. Electronic microscopy showed that these particles had on their surface, particles of PTFE dispersed homogeneously.

Fluorine content measurement (using the X-Ray fluorescence technology) on particles issued from both examples showed that the process of the invention enhances the dispersion of the PTFE nanoparticles in the particulate polyphenylsulfone polymer, besides improving the morphology of the final composition as shown in said examples.

## Claims

1. - Process for dispersing solid particles in a particulate polymer, which comprises the steps of :
(a) forming a solution (OS) of particles of a polymer (P1) in an organic solvent (S);
(b) forming an aqueous dispersion (AD) of solid particles (P2);
(c) mixing said solution (OS) with said dispersion (AD) as to obtain a liquid mixture (M), while avoiding substantial precipitation of either polymer (P1) or particles (P2);
(d) mixing said liquid mixture (M) with a non solvent (NS) as to obtain a slurry
(SL) comprising particles (P3);
a phase transfer agent (PTA) being further present during steps (b), (c) and/or (d).

2. - Process according to claim 1, wherein a phase-separator compound (PS), compatible with the solvent (S) and incompatible with the non-solvent (NS) used in step (d) is present during the formation of solution (OS).

3. - Process according to anyone of the preceding claims, wherein polymer (P1) is a synthetic thermoplastic polymer.

4. - Process according to anyone of the preceding claims, wherein
particles (P2) are nanoparticles.

5. - Process according to anyone of the preceding claims, wherein
particles (P2) comprise an organic water-dispersible polymer.

6. - Process according to claim 5, wherein polymeric particles (P2) have been synthetized according to a polymerization process comprising at least one step performed in an aqueous, medium.

7. - Process according to anyone of the preceding claims, wherein aqueous dispersion (AD) comprises an ionic surfactant.

8. - Process according to claim 7, wherein the ionic surfactant is an anionic surfactant.

9. - Process according to anyone of the preceding claims, wherein the solution (OS) is added to the aqueous dispersion (AD), the lattter being diluted with water.

10. - Process according to claim 9, wherein said water is saturated with an amount of an organic solvent (S) miscible therewith.

11. - Process according to anyone of the preceding claims, wherein the non-solvent (NS) is water.

12. - Process according to anyone of the preceding claims, wherein the organic solvent (S) and the non-solvent (NS) form an azeotropic mixture.

13. - Process according to claim 7 or 8, wherein the phase transfer agent (PTA) is generated in situ through an ion exchange reaction involving the surfactant.

14. - Process according to the preceding claim, wherein the surfactant is selected among salts of quaternary ammonium and phosphonium ions.

15. - Process according to the preceding claim, wherein the ion exchange reaction involves an inorganic Brönstedt acid.

16. - Process according to any of claims 1 to 12, wherein the PTA is added to the liquid mixture (M) at the end of or during step (c).

17. - Process according to anyone of the preceding claims, wherein organic solvent (S) is distilled from the liquid mixture (M) by the addition of vapor of the non-solvent (NS).

## Patentansprüche

1. Verfahren zum Dispergieren von festen Teilchen in einem teilchenförmigen Polymer, bei dem man:
(a) eine Lösung (OS) von Teilchen eines Polymers (P1) in einem organischen Lösungsmittel (S) bildet;
(b) eine wässrige Dispersion (AD) von festen Teilchen (P2) bildet;
(c) die Lösung (OS) mit der Dispersion (AD) mischt, wobei man unter Vermeidung von wesentlicher Ausfällung von Polymer (P1) oder Teilchen (P2) eine flüssige Mischung (M) erhält;
(d) die flüssige Mischung (M) mit einem Nichtlösungsmittel (NS) mischt, wobei
man eine Teilchen (P3) umfassende Aufschlämmung (SL) erhält;
wobei ferner während der Schritte (b), (c) und/oder (d) ein Phasentransferagens (PTA) vorliegt.

2. Verfahren nach Anspruch 1, bei dem während der Bildung der Lösung (OS) eine mit dem Lösungsmittel (S) verträgliche und mit dem in Schritt (d) verwendeten Nichtlösungsmittel (NS) unverträgliche Phasentrennverbindung (PS) vorliegt.

3. Verfahren nach einem der vorhergehenden Ansprüche, bei dem es sich bei dem Polymer (P1) um ein synthetisches thermoplastisches Polymer handelt.

4. Verfahren nach einem der vorhergehenden Ansprüche, bei dem es sich bei den Teilchen (P2) um Nanoteilchen handelt.

5. Verfahren nach einem der vorhergehenden Ansprüche, bei dem die Teilchen (P2) ein organisches wasserdispergierbares Polymer umfassen.

6. Verfahren nach Anspruch 5, bei dem die polymeren Teilchen (P2) gemäß einem Polymerisationsverfahren mit mindestens einem Schritt, der in einem wässrigen Medium durchgeführt wird, synthetitisiert worden sind.

7. Verfahren nach einem der vorhergehenden Ansprüche, bei dem die wässrige Dispersion (AD) ein ionisches Tensid umfasst.

8. Verfahren nach Anspruch 7, bei dem es sich bei dem ionischen Tensid um ein anionisches Tensid handelt.

9. Verfahren nach einem der vorhergehenden Ansprüche, bei dem man die Lösung (OS) zu der wässrigen Dispersion (AD) gibt, wobei letztere mit Wasser verdünnt wird.

10. Verfahren nach Anspruch 9, bei dem man das Wasser mit einer Menge eines damit mischbaren organischen Lösungsmittels (S) sättigt.

11. Verfahren nach einem der vorhergehenden Ansprüche, bei dem es sich bei dem Nichtlösungsmittel (NS) um Wasser handelt.

12. Verfahren nach einem der vorhergehenden Ansprüche, bei dem das organische Lösungsmittel (S) und das Nichtlösungsmittel (NS) ein Azeotrop bilden.

13. Verfahren nach Anspruch 7 oder 8, bei dem man das Phasentransferagens (PTA) in situ durch eine Ionenaustauschreaktion unter Beteiligung des Tensids erzeugt.

14. Verfahren nach dem vorhergehenden Anspruch, bei dem man das Tensid unter Salzen von quaternären Ammonium- und Phosphoniumionen auswählt.

15. Verfahren nach dem vorhergehenden Anspruch, bei dem an der Ionenaustauschreaktion eine Brönstedt-Säure beteiligt ist.

16. Verfahren nach einem der Ansprüche 1 bis 12, bei dem man das PTA am Ende von oder während Schritt (c) zu der flüssigen Mischung (M) gibt.

17. Verfahren nach einem der vorhergehenden Ansprüche, bei dem man das organische Lösungsmittel (S) durch Zusatz von Dampf des Nichtlösungsmittels (NS) aus der flüssigen Mischung (M) abdestilliert.

## Revendications

1. Procédé pour disperser des particules solides dans un polymère particulaire, qui comprend les étapes consistant à:
(a) former une solution (OS) de particules d'un polymère (P1) dans un solvant organique (S);
(b) former une dispersion aqueuse (AD) de particules solides (P2);
(c) mélanger ladite solution (OS) avec ladite dispersion (AD) de manière à obtenir un mélange liquide (M), tout en évitant une précipitation substantielle de polymère (P1) ou de particules (P2);
(d) mélanger ledit mélange liquide (M) avec un non-solvant (NS) de manière à
obtenir une suspension concentrée (SL) comprenant des particules (P3);
un agent de transfert de phase (PTA) étant en outre présent pendant les étapes (b), (c) et/ou (d).

2. Procédé selon la revendication 1, dans lequel un composé séparateur de phase (PS), compatible avec le solvant (S) et incompatible avec le non-solvant (NS) utilisé dans l'étape (d) est présent pendant la formation de solution (OS).

3. Procédé selon l'une quelconque des revendications précédentes, dans lequel le polymère (P1) est un polymère thermoplastique synthétique.

4. Procédé selon l'une quelconque des revendications précédentes, dans lequel les particules (P2) sont des nanoparticules.

5. Procédé selon l'une quelconque des revendications précédentes, dans lequel les particules (P2) comprennent un polymère organique dispersible dans l'eau.

6. Procédé selon la revendication 5, dans lequel les particules de polymère (P2) ont été synthétisées selon un procédé de polymérisation comprenant au moins une étape conduite dans un milieu aqueux.

7. Procédé selon l'une quelconque des revendications précédentes, dans lequel la dispersion aqueuse (AD) comprend un tensioactif ionique.

8. Procédé selon la revendication 7, dans lequel le tensioactif ionique est un tensioactif anionique.

9. Procédé selon l'une quelconque des revendications précédentes, dans lequel la solution (OS) est ajoutée à la dispersion aqueuse (AD), cette dernière étant diluée avec de l'eau.

10. Procédé selon la revendication 9, dans lequel ladite eau est saturée avec une quantité d'un solvant organique (S) miscible avec celui-ci.

11. Procédé selon l'une quelconque des revendications précédentes, dans lequel le non-solvant (NS) est l'eau.

12. Procédé selon l'une quelconque des revendications précédentes, dans lequel le solvant organique (S) et le non-solvant (NS) forment un mélange azéotropique.

13. Procédé selon la revendication 7 ou 8, dans lequel l'agent de transfert de phase (PTA) est généré in situ par une réaction d'échange d'ions mettant en oeuvre le tensioactif.

14. Procédé selon la revendication précédente, dans lequel le tensioactif est choisi parmi des sels d'ammonium quaternaire et des ions phosphonium.

15. Procédé selon la revendication précédente, dans lequel la réaction d'échange d'ions met en oeuvre un acide de Bronsted inorganique.

16. Procédé selon l'une quelconque des revendications 1 à 12, dans lequel le PTA est ajouté au mélange liquide (M) à la fin de ou pendant l'étape (c).

17. Procédé selon l'une quelconque des revendications précédentes, dans lequel le solvant organique (S) est distillé depuis le mélange liquide (M) par l'ajout de vapeur du non-solvant (NS).
